# EUROPÄISCHE PATENTANMELDUNG

(11) **EP 3 450 093 A1**
(43) Veröffentlichungstag der Anmeldung: **06.03.2019**
(21) Anmeldenummer: 18189098.9
(22) Anmeldetag: 15.08.2018
(51) Int. Cl.: B23Q 11/08, B23Q 17/24, B60S 1/02, B63B 19/02

(54) **SICHTFENSTER MIT KAMERA**

(30) Priorität: 01.09.2017 DE 102017120138
(71) Anmelder: Autz + Herrmann GmbH, 69115 Heidelberg (DE)
(72) Erfinder: Friedrich, Florian, 69121 Heidelberg (DE)
(74) Vertreter: Rüger Abel

(57) **Zusammenfassung**

Die erfindungsgemäße Klarsichtscheibe weist zwei durchsichtige Scheiben auf, von denen eine ruht und die andere dreht. Zwischen den beiden Scheiben oder an der den zu beobachtenden Raum abgewandten Seite der ruhenden Scheibe ist eine Kamera (28) angeordnet, die jedenfalls durch die drehende Scheibe (18) schaut. Die Stromversorgung der Kamera erfolgt über die Stromversorgung der Antriebseinrichtung, so dass Dauerbetrieb auch dann möglich ist, wenn die Kamera in einem der Wartung entzogenen Raum, zum Beispiel zwischen der ersten und der zweiten Scheibe oder zwischen der ersten Scheibe und einer nicht durchbrochenen Trennwand angeordnet ist.

## Beschreibung

Die Erfindung betrifft eine Klarsichtscheibe, insbesondere für Maschineneinhausungen sowie auch für andere Anwendungen.

Um Durchblick an Sichtscheiben zu gewähren, die Verschmutzungen ausgesetzt sind und insbesondere mit Fluiden wie Wasser, Öl oder dergleichen bespritzt oder schwallweise beaufschlagt werden, werden häufig rotierende Sichtfenster eingesetzt.

Ein solches rotierendes Sichtfenster ist beispielsweise aus der US 3 188 700 sowie auch aus der DE 10 2008 045 793 A1 bekannt.

Das bekannte Sichtfenster weist einen runden Rahmen auf, der auf eine Sichtscheibe aufzusetzen oder in eine entsprechende Öffnung der Sichtscheibe einzusetzen ist. In dem Rahmen befindet sich eine ruhend angeordnete erste Scheibe, die mittig ein Lager für eine zweite, rotierende Scheibe trägt. Die rotierende Scheibe ist an der schmutz- oder fluidbeaufschlagten Seite der runden Scheibe angeordnet. In dem ringförmigen Rahmen der Anordnung ist ein Antrieb für die rotierende Scheibe untergebracht. Der Antrieb wird über ein Kabel mit Betriebsstrom versorgt.

Aus der US 3 188 700 ist es auch bekannt, den Antrieb der rotierenden Scheibe an der zentralen Lagereinrichtung unterzubringen.

Die rotierende Scheibe wird durch Schleuderwirkung von Fluid und Schmutz freigehalten, so dass, sobald die Scheibe ausreichend schnell dreht, ständiger Durchblick gewährt ist.

Derartige Klarsichtscheiben können insbesondere an Werkzeugmaschinen eingesetzt werden, an denen das im Arbeitsraum eingesetzte und stets oder schwallweise auf die Sichtscheiben spülende Kühlschmiermittel den Durchblick durch die Sichtscheibe beeinträchtigt. Durch die Klarsichtscheibe lassen sich die in dem Arbeitsraum ablaufenden Bearbeitungsvorgänge beobachten.

Aus der DE 197 46 740 A1 ist außerdem ein als Regenschutz dienendes Kameragehäuse bekannt, das lichteintrittsseitig durch eine drehend gelagerte und angetriebene Klarsichtscheibe abgeschlossen ist. Das Objektiv der Kamera ist in unmittelbarer Nachbarschaft der drehenden Scheibe angeordnet. Die optische Achse der Kamera verläuft durch die drehende Scheibe, so dass die Kamera auch dann, wenn das Gehäuse mit auftreffenden Flüssigkeiten beaufschlagt wird, ein klares Bild aufnehmen kann. In dem Regenschutzgehäuse der Kamera ist außerdem eine Batterie für den Betrieb des Motors der drehenden Scheibe untergebracht.

Es ist Aufgabe der Erfindung, eine Klarsichtscheibe zu schaffen, die sowohl Personen Durchblick zu einem zu beobachtenden Bereich gewährt, wie auch eine maschinelle Überwachung des einzusehenden Bereichs gestattet. Insbesondere soll die Klarsichtscheibe wartungsarm und für Dauereinsatz geeignet sein.

Diese Aufgabe wird mit der Klarsichtscheibe nach Anspruch 1 gelöst, wodurch sie sich insbesondere für Maschineneinhausungen, jedoch auch für andere Anwendungen eignet.

Die erfindungsgemäße Klarsichtscheibe weist eine erste, durchsichtige Scheibe auf, die an einer Maschineneinhausung oder einer anderen Wand, insbesondere einer durchsichtigen Scheibe oder dergleichen, befestigbar ist. Die erste, durchsichtige Scheibe ist vorzugsweise so ausgebildet und angeordnet, dass sie eine etwaige, an der Trennwand vorgesehene Öffnung fluiddicht oder zumindest spritzwassergeschützt verschließt. Ist die Trennwand durchsichtig kann die erste, durchsichtige Scheibe auch auf die Trennwand aufgesetzt oder von dieser selbst gebildet sein.

Dier erste Scheibe trägt eine Lagereinrichtung für die zweite Scheibe, die drehend gelagert und angetrieben ist. Zum Antrieb dient eine Antriebseinrichtung, die vorzugsweise, jedoch nicht zwingend als elektrischer Antrieb ausgebildet ist. Die Antriebseinrichtung kann in einem an dem äußeren Rand der ersten Scheibe angeordneten, vorzugsweise ringförmigen Gehäuse untergebracht sein. Damit kann die zentrisch angeordnete Lagereinrichtung schlank, d.h. mit einem Außenradius ausgebildet sein, der klein im Verhältnis zum Radius der drehbar gelagerten Scheibe ist, so dass ein großes Sichtfeld freigegeben wird.

An einer Seite der ersten Scheibe ist eine Kamera angeordnet, deren Objektiv eine durch die zweite Scheibe verlaufende Blickrichtung aufweist. Die Kamera hat dabei vorzugsweise Außenabmessungen, die geringer sind als die Außenabmessungen der Lagereinrichtung. Insoweit wird der freie Durchblick durch die Klarsichtscheibe nicht beeinträchtigt. Es können sowohl Personen den zu beobachtenden Bereich visuell einsehen als auch Kameraaufzeichnungen oder Kamerabeobachtungen vorgenommen werden.

Die Kamera ist zur Energieversorgung mit der Antriebseinrichtung verbunden. Damit ist permanenter Betrieb der Kamera ohne Batteriewechsel möglich. Außerdem wird genügend Betriebsleistung bereitgestellt, um problemlos eine funkgestützte Datenübertragung von der Kamera zu einem äußeren Empfänger auch über größere Reichweiten und in elektromagnetisch gestörte Umgebung zu ermöglichen.

Ist die Antriebseinrichtung eine elektrische Antriebseinrichtung, kann die Kamera mit der Antriebseinrichtung verbunden sein, indem die Kamera mit der Energieversorgung, z.B. einem Versorgungskabel verbunden ist, mit dem der Antriebseinrichtung und somit auch der Kamera Betriebsleistung zugeleitet wird. Es ist aber auch möglich, die Kamera über ein magnetisches Wechselfeld mit der drehenden Scheibe und somit letztlich mit der Antriebseinrichtung zu verbinden. Sind an der Scheibe ein oder mehrere Permanentmagnete angeordnet, die mit der Scheibe umlaufen, und sind an der Bildaufnahmeeinrichtung Induktionsspulen angeordnet, kann die zur Stromversorgung der Kamera erforderliche Betriebsspannung aus solchen Fangspulen generatorisch gewonnen werden. Die Permanentmagnete können zu dem mit der Scheibe verbundenen elektrischen Antrieb gehören.

Die Kamera ist vorzugsweise an einem Träger gehalten, der sich von dem ringförmigen Gehäuse radial nach innen erstreckt. Der Träger kann dabei eine freitragende Zunge bilden oder an der zweiten Scheibe anliegend angeordnet sein. Es ist dabei sowohl möglich, die Kamera auf der der zweiten Scheibe zugewandten Seite der ersten Scheibe als auch an der von der zweiten Scheibe abgewandten Seite der ersten Scheibe anzuordnen. Die Kamera ist dabei vorzugsweise fest eingebaut und dem Zugriff durch einen Bediener entzogen. Dafür ist sie aber in hohem Maße sowohl mechanisch als auch vor Fluiden geschützt. Dies insbesondere, wenn sie in einem von Sperrluft durchströmten Raum angeordnet ist. Ein gesondertes Kameraschutzgehäuse, das die zum Betrieb der Kamera, ihren Träger und die Kamera selbst, d.h. das gesamte Bildaufnahmesystem, einschließen würde, ist nicht vorhanden.

Die Kamera kann an dem Träger starr befestigt sein. Alternativ kann sie über eine Feder- und/oder Dämpfereinrichtung mit dem Träger verbunden sein. Eine solche federnde und dämpfende Einrichtung kann beispielsweise ein federndes Kardangelenk sein, das mit der Kamera eine mechanische Resonanzfrequenz festlegt, die vorzugsweise außerhalb, insbesondere unterhalb, eines Frequenzspektrums von Anregungsfrequenzen liegt, die als Schwingungen an die Klarsichtscheibe übertragen werden.

Die Verbindung der Kamera zu der elektrischen Antriebseinrichtung erfolgt vorzugsweise leidglich über zwei Anschlussleitungen der Kamera, die mit Anschlussklemmen der Antriebseinrichtung verbunden sind. Damit werden die Antriebseinrichtungen und die Kamera über die gleiche Versorgungsleitung mit Betriebsleistung versorgt. Die Antriebseinrichtung wie auch die Kamera können dazu elektronische Schaltungen enthalten, die aus der über das Kabel herangeführten elektrischen Leistung, die jeweils zum Betrieb der Kamera und der Antriebseinrichtung geeigneten Spannungen und Ströme ableiten und diese voneinander entkoppeln.

Alternativ kann die Kamera durch das elektrische oder magnetische Streufeld der elektrischen Antriebseinrichtung mit Energie versorgt werden und somit über das Streufeld mit der Antriebseinrichtung verbunden sein. Zum Beispiel können, wie oben erläutert, mit dem Umfang der drehenden Scheibe verbundene Permanentmagnete an der in Nachbarschaft zum Außenumfang der drehenden Scheibe angeordneten Kamera bzw. ihrer Betriebsschaltung wechselnde Magnetfelder erzeugen, die von Induktionsspulen aufgefangen und genutzt werden. Diese Lösung ist auch bei Klarsichtscheiben mit Druckluftantrieb praktikabel, bei denen die drehbar gelagerte Scheibe zur Spannungsversorgung der Kamera wenigstens einen Permanentmagneten trägt.

Weiterbildungen und Abwandlungen der erfindungsgemäßen Klarsichtscheibe sind Gegenstand der Zeichnung, der Beschreibung oder von Ansprüchen. Es zeigen:
Figur 1 die erfindungsgemäße Klarsichtscheibe in perspektivischer vereinfachter Darstellung,
Figur 2 eine Längsschnittdarstellung der erfindungsgemäßen Klarsichtscheibe,
Figur 3 einen Ausschnitt der Klarsichtscheibe mit Blickrichtung in den zu beobachtenden Raum unter Ausblendung von Teilen der Klarsichtscheibe zur Veranschaulichung ihres Antriebs,
Figur 4 eine ausschnittsweise Ansicht der Klarsichtscheibe mit Blickrichtung aus dem zu beobachtenden Raum bei abgenommener drehbarer Scheibe,
Figur 5 eine ausschnittsweise Ansicht der Klarsichtscheibe nach Figur 2,
Figur 6 die zu der Klarsichtscheibe nach den vorigen Figuren gehörige Kamera und ihren Träger, in perspektivischer Ansicht,
Figur 7 und 8 abgewandelte Ausführungsformen der Klarsichtscheibe, in schematisierter ausschnittsweiser Vertikalschnittdarstellung.

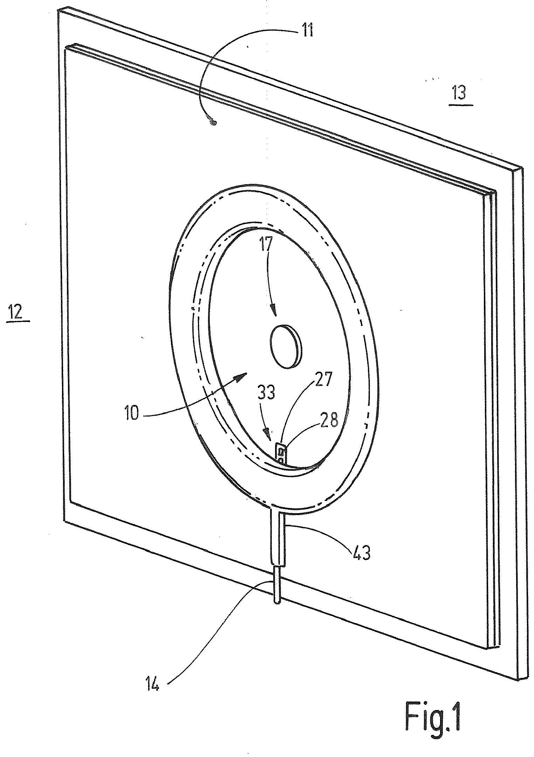

In Figur 1 ist eine Klarsichtscheibe 10 veranschaulicht, die an einer zum Beispiel durchsichtig ausgebildeten Trennwand 11 angebracht ist, die einen zu beobachtenden, schmutz- oder fluidbeaufschlagten zu beobachtenden Raum 12 von einem Beobachterraum 13 trennt, in dem sich Personen aufhalten können. Um solchen Personen auch dann Einblick in den zu beobachtenden Raum 12 zu gewähren, wenn Flüssigkeiten als Spitzer oder schwallweise auf die Trennwand 11 geraten, ist die Klarsichtscheibe 10 vorgesehen, die durch Schleuderwirkung freien Durchblick herstellt. Zur Energieversorgung der Klarsichtscheibe 10 ist ein Kabel 14 vorgesehen.

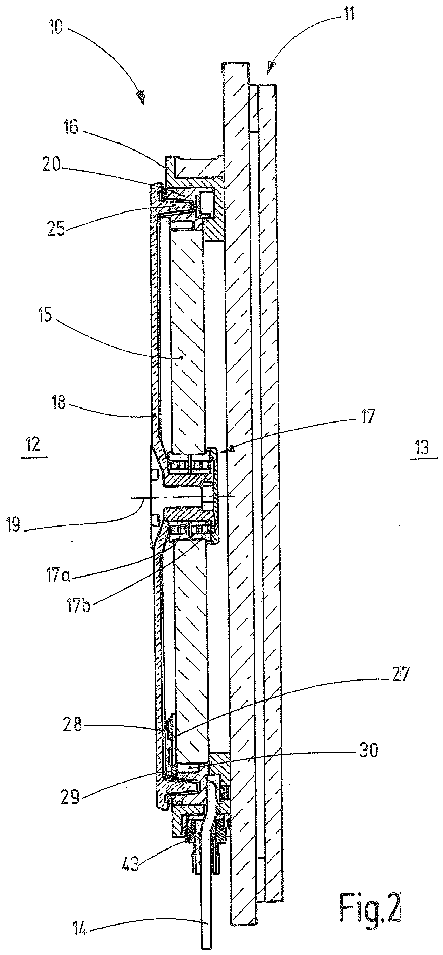

Der Aufbau der Klarsichtscheibe 10 ergibt sich im Wesentlichen aus Figur 2. Wie erkennbar, ist die Klarsichtscheibe 10 als eigenständiges Gerät auf die beispielhaft doppelwandig dargestellte Trennwand 11 aufgesetzt und mit dieser verbunden. Zu der Klarsichtscheibe 10 gehört eine erste, an der Trennwand 11 ruhend angeordnete Scheibe 15, die vorzugsweise einen kreisrunden Außenumfang aufweist, der an einem ringförmigen Gehäuse 16 gefasst ist. Das Gehäuse 16 ist seinerseits mit der Trennwand 11 verbunden, beispielsweise verklebt, und hält die Scheibe 15 in einem festen Abstand zu der Trennwand 11.

Die erste Scheibe 15 trägt eine Lagereinrichtung 17 für eine zweite Scheibe 18, um diese in einem Abstand zu der ersten Scheibe 15 zu halten und um eine Mittelachse 19 drehbar zu lagern. Die Mittelachse 19 ist vorzugsweise zugleich die Mittelachse der ersten Scheibe 15, so dass die beiden Scheiben 15, 18 konzentrisch und vorzugsweise parallel zueinander angeordnet sind. Die Lagereinrichtung 17 umfasst vorzugsweise ein oder mehrere Wälzlager 17a, 17b, so dass die zweite Scheibe 18 leicht um die Drehachse 19 drehbar ist.

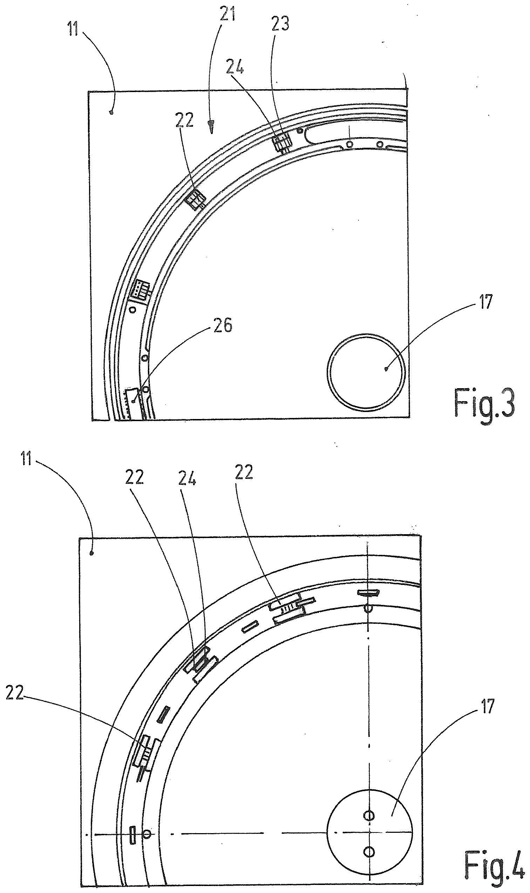

Aus den Figuren 3 und 4 geht der Aufbau einer Antriebseinrichtung 20 hervor, die zum Drehen und Antreiben der zweiten Scheibe 18 dient. Die Antriebseinrichtung 20 umfasst eine Spulenanordnung 21, mit einem Spulenkern 22, darauf angeordneten Wickelkörpern 23 und Spulen 24. Die Spulenanordnung 21 definiert einen zu der Drehachse 19 konzentrischen ringförmigen Schlitz, in den ein mit einem oder mehreren Permanentmagneten versehener ringförmiger rippenartiger Vorsprung 25 ragt, der konzentrisch zu der Drehachse 19 angeordnet und an der zweiten Scheibe 15 befestigt ist. Anstelle der Permanentmagnete können auch elektrisch leitfähige nichtmagnetische Materialien, wie zum Beispiel ein Aluminiumring, oder eine Kombination aus nichtmagnetischen und weichmagnetischen Materialien vorgesehen sein, um einen Wirbelstromantrieb nach dem Prinzip der Asynchronmaschine zu bilden, oder weichmagnetische oder hartmagnetische Materialien, wie zum Beispiel ein Stahlring, um einen Antrieb nach Art eines Hysteresemotors zu bilden. Zu der Antriebseinrichtung 20 gehört außerdem eine in Figur 3 schematisch angedeutete Steuerschaltung 26, die dazu eingerichtet ist, aus der über das Kabel 14 zugeführten Spannung Stromimpulse für die Spulen 24 abzuleiten, die eine Drehung der zweiten Scheibe 18 bewirken.

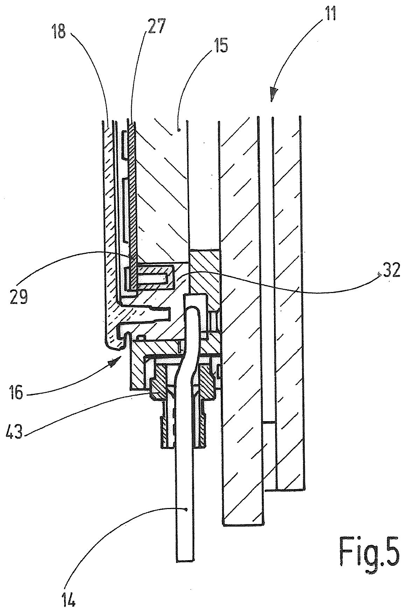

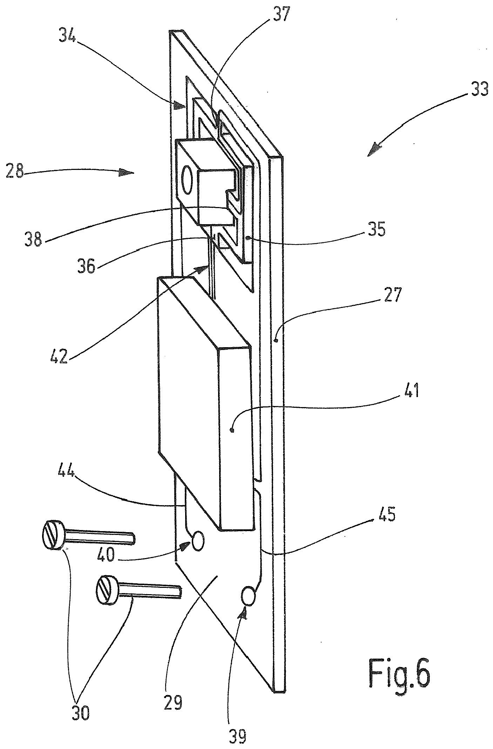

Wie aus Figur 2 weiter hervorgeht, ist an dem Gehäuse 16 über einen Träger 27 eine Kamera 28 gehalten, deren Blickrichtung durch die zweite Scheibe 18 in den zu beobachtenden Raum 12 gerichtet ist (siehe auch Figur 1). Zur weiteren Erläuterung wird auf die Figuren 5 und 6 Bezug genommen. Der Träger 27 kann ein zungenartiger Träger sein, der in geringem Abstand zu der ersten Scheibe 15 oder an dieser stellenweise oder vollflächig anliegend angeordnet ist. Vorzugsweise ist der Träger 27 lediglich an einem, seinem radial außen liegenden Ende 29 mit dem ringförmigen Gehäuse 16 verbunden. An dem Ende 29 ist der Träger 27 zum Beispiel über zwei Schrauben 30 mit dem Gehäuse 16 verbunden und zugleich elektrisch kontaktiert. Die beiden Schrauben 30 sind in Kontaktbuchsen 32 eingeschraubt, die in das Gehäuse 16 eingelassen sind und mit zwei Adern des Kabels 14 in elektrischer Verbindung stehen.

Der die Buchse 32 aufnehmende Teil des Gehäuses 16 kann beispielsweise aus einem elektrisch isolierenden Material, zum Beispiel Kunststoff, bestehen oder Kunststoffeinsätze aufweisen, die die Kontaktbuchsen 32 aufnehmen. Das Kabel 14 ist über eine Verschraubung 43, einen Anschlusskasten oder dergleichen an das Gehäuse 16 angeschlossen. Zugleich sind die wenigstens zwei Adern des Kabels 14 mit der Steuerschaltung 26 der Antriebseinrichtung 20 verbunden, um somit sowohl die Kamera 28 wie auch die Antriebseinrichtung 20 mit elektrischer Energie zu versorgen. Alternativ kann das Kabel auch mehr als zwei Adern aufweisen, um die Kamera und die Antriebseinrichtung 20 gemeinsam mit Energie zu versorgen. Weiter alternativ können anstelle eines Kabels zwei oder mehrere gemeinsam geführte Kabel vorgesehen sein. Das Kabel kann ein Buskabel sein, über das sowohl die Energieversorgung der Antriebseinrichtung als auch der Bildaufnahmeeinrichtung 33 erfolgt. Das Buskabel kann alternativ oder zusätzlich auch dazu eingerichtet sein Steuerimpulse, z.B. Ein- und Ausschaltimpulse für die Kamera 28 oder die Antriebseinrichtung, Stellimpulse für einen Stellantrieb der Kamera 28 und/oder Bild- oder Videodaten, zu übertragen.

Figur 6 veranschaulicht weitere optionale Details der von der Kamera 28 und ihrem Träger 27 gebildeten Bildaufnahmeeinrichtung 33. Zum Beispiel kann die Kamera 28 an dem Träger 27 über eine Feder- und Dämpfungseinrichtung 34 gehalten sein, die zum Beispiel nach Art eines Kardangelenks mit einem Zwischenring 35 ausgebildet ist, der über zwei Federstege 36, 37 um eine erste, in Figur 6 vertikale Drehachse an dem Träger 27 schwenkbar gelagert ist. Die Kamera 28 kann dann über weitere Federstege, von denen in Figur 6 nur ein Federsteg 38 sichtbar ist, um eine dazu querstehende Drehachse schwenkbar gelagert sein. Die Federstege ermöglichen ein Schwenken der optischen Achse der Kamera 28 in einem kegelförmigen Bereich um die Ruheachse herum, die zu den beiden Schwenkachsen die von den Federstegen 36 bis 38 definiert ist, senkrecht steht. Vorzugsweise legen die Masseträgheit der Kamera 38 und die Elastizität der Federstege 36 bis 38 eine Eigenfrequenz fest, die unterhalb von Anregungsfrequenzen liegt, die über die Trennwand 11 auf die Klarsichtscheibe 10 übertragen werden. Der Träger 27 und die Kamera 28 sind vorzugsweise außerhalb jedes von der Antriebseinrichtung 20 hervorgerufenen Feldes, insbesondere Magnetfeldes angeordnet. Damit ist eine besonders ruhige Lagerung der Kamera 28 unabhängig möglich, wodurch das Potential hochauflösender Kameras besser genutzt werden kann.

Die Spannungsversorgung der Kamera 28 kann über flexible Leitungen oder über Leiterzüge 44, 45 erfolgen, die sich über die Federstege 36 bis 38 und den Zwischenring 35 erstrecken und zu Befestigungsöffnungen 39, 40 zur Aufnahme der Schrauben 30, 31 führen. Die Leiterzüge 44, 45 können die Kamera 28 auch mit weiteren Schaltungskomponenten verbinden.

Zur Spannungsaufbereitung kann der Träger 27 mit einer Betriebsschaltung 41 versehen sein, die die über die Schrauben 30, 31 und Leiterzüge 44, 45 zugeführte Spannung filtert, siebt, heruntersetzt oder auch heraufsetzt.

Die Kamera 28 kann Mittel enthalten, die zur Funkübertragung aufgenommener Bilder geeignet sind. Alternativ können solche Funkübertragungsmittel Teil der Betriebsschaltung 41 sein. In letzterem Fall führen ein oder mehrere Leitungen 42 von der Kamera 28 zu der Betriebsschaltung 41. Die Leitungen 42 können wiederum über den Zwischenring 35 und die Federstege 36, 37, 38 geführt sein. In Figur 6 ist dies lediglich schematisch angedeutet.

Die insoweit beschriebene Klarsichtscheibe 10 arbeitet wie folgt:
In Betrieb erhält die Klarsichtscheibe 10 über das Kabel 14 elektrische Leistung in Form von gleich- oder Wechselstrom bei einer mehr oder weniger festgelegten Spannung. Die betreffende Spannung ist einerseits an die Steuerschaltung 26 und andererseits über die Schrauben 30 an die Betriebsschaltung 41 angelegt. Die Steuerschaltung 26 bewirkt eine Ansteuerung der Spulen 24, womit die zweite Scheibe 18 in schnelle Drehung versetzt wird. Zugleich wird über die Betriebsschaltung 41 die Kamera 28 aktiviert, die Bilder, Videos oder Videosequenzen aufnimmt und diese über die Funkschnittstelle, zum Beispiel eine WLAN-Schnittstelle zum Empfang bereitstellt. Die drehbare Scheibe 18 hält dabei den Durchblickbereich sowohl für in dem Beobachterraum befindliche Personen wie auch für die Kamera 28 frei. Aufgrund der geringen Abmessungen der Kamera 28 beeinträchtigt diese den Durchblick nicht. Dies insbesondere dann nicht, wenn die Abmessungen der Bildaufnahmeeinrichtung 33 geringer sind, als die Abmessungen der Lagereinrichtung 17.

Gegebenenfalls kann die Feder- und Dämpfungseinrichtung 34 auch als Winkelstelleinrichtung ausgebildet sein. Entsprechend können die Federstege 36, 37, 38 mit Aktoren beispielsweise Piezo-Aktoren versehen, oder selbst als solche ausgebildet sein. Diese Aktoren können durch die Betriebsschaltung 41 zum Beispiel automatisch oder entsprechend empfangener Funkbefehle angesteuert werden, um die Kamera 28 auf interessierende Bereiche des zu beobachtenden Raums 12 auszurichten.

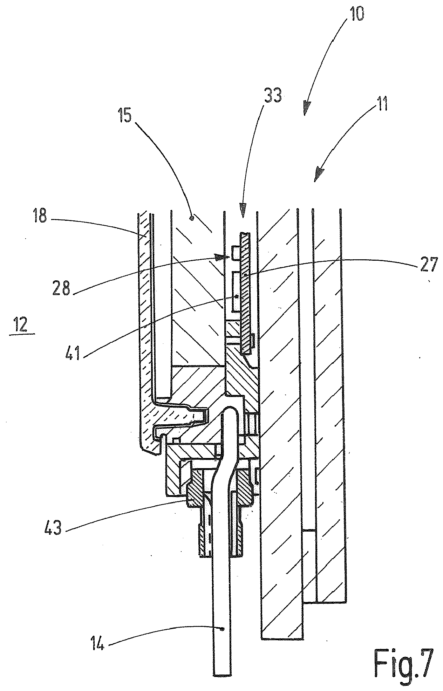

Figur 7 veranschaulicht eine abgewandelte Ausführungsform der erfindungsgemäßen Klarsichtscheibe 10, wobei zur Erläuterung des Aufbaus und der Funktionsweise unter Bezugnahme auf die eingeführten Bezugszeichen auf die vorige Beschreibung verwiesen wird. Abweichend von der vorigen Beschreibung gilt jedoch, dass die Bildaufnahmeeinrichtung 33 nicht an der dem zu beobachtenden Raum zugewandten Seite der ersten Scheibe 15, sondern an der dem Raum 12 abgewandten Seite derselben angeordnet ist. Hinsichtlich der Kontaktierung, Stromversorgung und Anordnung des Trägers 27 gelten die vorigen Ausführungen entsprechend. Ergänzend gilt, dass der Träger 27 sowohl an der Trennwand 11 anliegend, als auch, wie dargestellt, von dieser beabstandet angeordnet sein kann.

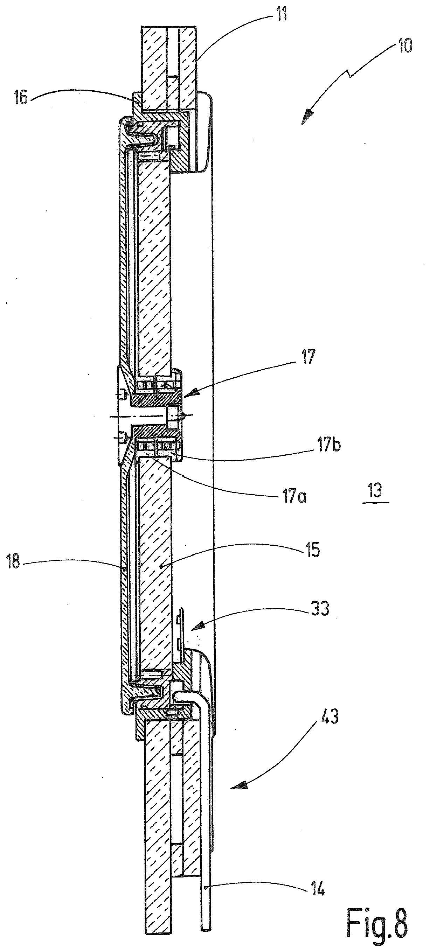

Eine weitere abgewandelte Ausführungsform der Klarsichtscheibe 10 ergibt sich aus Figur 8. Bei dieser Ausführungsform ist die Trennwand 11 mit einem Ausschnitt versehen, in dem die Klarsichtscheibe 10 mit ihrem Gehäuse 16 befestigt ist. Die Bildaufnahmeeinrichtung 33 kann, wie dargestellt, an der dem Beobachterraum 13 zugewandten Seite der ersten Scheibe 15 oder auch alternativ, entsprechend der Ausführungsform der Figuren 1 und 2, zwischen der ersten Scheibe 15 und der zweiten Scheibe 18 angeordnet sein.

Es wird darauf hingewiesen, dass die Erfindung nicht auf Klarsichtscheiben 10 mit gehäuseseitig untergebrachter Antriebseinrichtung beschränkt ist. Vielmehr kann der Drehantrieb der Scheibe 18 auch in oder an der Lagereinrichtung 18 angeordnet sein, wobei sich dann das zur Stromversorgung dienende Kabel radial über die erste Scheibe 15 von außen her zu dem Zentrum mit Lagereinrichtung 17 und Antriebseinrichtung erstreckt. In diesem Fall kann sich das Kabel an oder in einem Träger befinden, der zugleich die Bildaufnahmeeinrichtung 33 trägt.

Die erfindungsgemäße Klarsichtscheibe weist zwei durchsichtige Scheiben auf, von denen eine ruht und die andere dreht. Zwischen den beiden Scheiben 15, 18 oder an der dem zu beobachtenden Raum 12 abgewandten Seite der ruhenden Scheibe 15 ist eine Kamera 28 angeordnet, die jedenfalls durch die drehende Scheibe 18 schaut. Die Stromversorgung der Kamera 28 erfolgt über die Stromversorgung der Antriebseinrichtung 20, so dass Dauerbetrieb auch dann möglich ist, wenn die Kamera 28 in einem der Wartung entzogenen Raum, zum Beispiel zwischen der ersten und der zweiten Scheibe oder zwischen der ersten Scheibe und einer nicht durchbrochenen Trennwand angeordnet ist.

**Bezugszeichen:**

| | |
|---|---|
| 10 | Klarsichtscheibe |
| 11 | Trennwand |
| 12 | zu beobachtender Raum |
| 13 | Beobachterraum |
| 14 | Kabel |
| 15 | erste Scheibe |
| 16 | Gehäuse |
| 17 | Lagereinrichtung |
| 17a, b | Wälzlager |
| 18 | zweite Scheibe |
| 19 | Drehachse |
| 20 | Antriebseinrichtung |
| 21 | Spulenanordnung |
| 22 | Spulenkern |
| 23 | Wickel körper |
| 24 | Spulen |
| 25 | Vorsprung |
| 26 | Steuerschaltung |
| 27 | Träger |
| 28 | Kamera |
| 29 | Ende des Trägers 27 |
| 30 | Schrauben |
| 32 | Kontaktbuchsen |
| 33 | Bildaufnahmeeinrichtung |
| 34 | Feder- und Dämpfungseinrichtung |
| 35 | Zwischenring |
| 36, 37, 38 | Federstege |
| 39, 40 | Befestigungsöffnungen |
| 41 | Betriebsschaltung |
| 42 | Leitungen |
| 43 | Anschlussgehäuse |
| 44, 45 | Leitungen |
| | |

## Patentansprüche

1. Klarsichtscheibe (10), insbesondere für Maschineneinhausungen,
mit einer ersten durchsichtigen Scheibe (15),
mit einer zweiten durchsichtigen Scheibe (18) mit einer an der ersten Scheibe (15) gehaltenen Lagereinrichtung (17), die mit der zweiten Scheibe (18) verbunden ist, um diese in einem Abstand zu der ersten Scheibe (15) zu halten und drehbar zu lagern,
mit einer an der ersten Scheibe (15) gehaltenen Antriebseinrichtung (20), die zum drehenden Antreiben der zweiten Scheibe (18) mit dieser verbunden ist und die einen Anschluss zur Energieversorgung (14) aufweist,
mit einer an einer Seite der ersten Scheibe (15) angeordneten Kamera (28), die ein Objektiv aufweist, dessen Blickrichtung durch die zweite Scheibe (18) gerichtet ist
wobei die Kamera (28) zur Energieversorgung mit der Klarsichtscheibe (10) verbunden ist.

2. Klarsichtscheibe nach Anspruch 1, **dadurch gekennzeichnet, dass** die Antriebseinrichtung (20) eine Steuerschaltung (26) aufweist, die in einem ringförmigen Gehäuse (16) untergebracht ist.

3. Klarsichtscheibe nach Anspruch 2, **dadurch gekennzeichnet, dass** das ringförmige Gehäuse (16) konzentrisch zu der Lagereinrichtung (17) angeordnet ist und die Antriebseinrichtung (20) beherbergt.

4. Klarsichtscheibe nach einem der vorstehenden Ansprüche 2 oder 3, **dadurch gekennzeichnet, dass** die Kamera (28) auf einem Träger (27) angeordnet ist, der sich von dem Gehäuse (16) ausgehend radial nach innen erstreckt.

5. Klarsichtscheibe nach Anspruch 4, **dadurch gekennzeichnet, dass** der Träger (27) an dem Gehäuse (16) gehalten und im Abstand zu der ersten Scheibe (15) verlaufend angeordnet ist.

6. Klarsichtscheibe nach Anspruch 4, **dadurch gekennzeichnet, dass** der Träger (27) an dem Gehäuse (16) gehalten und an der ersten Scheibe (15) anliegend angeordnet ist.

7. Klarsichtscheibe nach einem der vorstehenden Ansprüche, **dadurch gekennzeichnet, dass** die Kamera (28) an der der zweiten Scheibe (18) zugewandten Seite der ersten Scheibe (15) angeordnet ist.

8. Klarsichtscheibe nach einem der vorstehenden Ansprüche, **dadurch gekennzeichnet, dass** die Kamera (28) an der der zweiten Scheibe (18) abgewandten Seite der ersten Scheibe (15) angeordnet ist.

9. Klarsichtscheibe nach einem der vorstehenden Ansprüche, **dadurch gekennzeichnet, dass** die Kamera (28) zur Energieversorgung mit der Antriebseinrichtung (20) verbunden ist.

10. Klarsichtscheibe nach einem der vorstehenden Ansprüche, **dadurch gekennzeichnet, dass** zur Energieversorgung der Kamera (28) und der Antriebseinrichtung (20) ein Kabel (14) vorgesehen ist, das in einem Anschlussgehäuse (43) angeschlossen ist.

11. Klarsichtscheibe nach Anspruch 10, **dadurch gekennzeichnet, dass** die Kamera (28) auf einem Träger (27) angeordnet ist, der elektrische Anschlussleitungen (44, 45) trägt und der mit den Anschlussklemmen verbunden und dabei mechanisch gehalten ist, wobei die Anschlussleitungen (44, 45) mit den Anschlussklemmen elektrisch verbunden sind.
